# EUROPÄISCHE PATENTSCHRIFT

(11) **EP 3 221 939 B1**
(45) Veröffentlichungstag und Bekanntmachung des Hinweises auf die Patenterteilung: **19.12.2018**
(21) Anmeldenummer: 15817058.9
(22) Anmeldetag: 16.11.2015
(51) Int. Cl.: F16L 5/10, F16L 5/14, H02G 3/22

(54) **LEITUNGSDURCHFÜHRUNG**
LINE BUSHING
TRAVERSÉE FORMANT CONDUIT

(30) Priorität: 18.11.2014 DE 102014016891
(43) Veröffentlichungstag der Anmeldung: 27.09.2017
(73) Patentinhaber: Jacob Gmbh Elektrotechnische Fabrik, 71394 Kernen (DE)
(72) Erfinder: SOHN, Wolfgang, 71549 Auenwald (DE)
(74) Vertreter: Jendricke, Susann
(86) Internationale Anmeldenummer: PCT/DE2015/000542
(87) Internationale Veröffentlichungsnummer: WO 2016/078632

(56) Entgegenhaltungen:
- EP-A1- 1 811 625
- EP-A2- 2 763 256
- WO-A1-2009/022960
- DE-A1- 10 047 715
- JP-A- H09 247 825
- KR-A- 20100 090 583
- US-A- 2 404 531

## Beschreibung

Die Erfindung betrifft eine Leitungsdurchführung zur Festlegung in einer Öffnung einer Wand eines Gehäuses oder dergleichen, gemäß Anspruch 1.

Leitungsdurchführungen der in Rede stehenden Art werden auch als Kabeldurchführungen oder Gehäusedurchführungen bezeichnet. Sie werden zum Halten und Abdichten von z.B. Kabeln, Leitungen, Kabelschutzschläuchen oder anderweitigen Schläuchen verwendet. Der hier gewählt Begriff "Leitungsdurchführung" soll die elektrische Leitung wie auch einen Schlauch mit innenliegenden elektrischen Leitungen oder einen Schlauch zum Gas- oder Stofftransport umfassen.

Diese Durchführungen weisen mehrere Durchtrittsöffnungen zum Durchführen von Leitungen auf und werden in der Wandöffnung eines Maschinen- oder Gerätegehäuses oder eines Schaltschranks montiert. Im Hinblick auf die Montage einer größeren Anzahl von Leitungen ersetzen Leitungsdurchführungen herkömmliche Kabelverschraubungen oder Schlauchverschraubungen, da sie gegenüber der Verwendung einzelner Kabelverschraubungen oder Schlauchverschraubungen weniger platzaufwendig und weniger teuer und sind.

Leitungsdurchführungen realisieren in Bezug auf die durchgeführten Leitungen deren Zugentlastung und Abdichtung und verschließen nach der Montage die Wandöffnung. Die Abdichtungsfunktion wird bisher durch Dichtungen übernommen, die zwischen Wand und Leitungsdurchführung angeordnet sind.

Aus der Druckschrift DE 100 47 715 A1 ist eine Kabeldurchführung der in Rede stehenden Art bekannt, die aus zwei Rahmenteilen aufgebaut ist und deren zueinander weisende Aussparungen die Durchtrittsöffnungen für die Kabel ausbilden.

In die Durchtrittsöffnungen sind Tüllen zur Aufnahme der durch zuführenden Kabel eingesetzt. Die beiden Rahmenteile bilden im zusammengebauten Zustand einen an der zur Wand weisenden Rückseite angeordneten um den Gesamtumfang beider Rahmenteile umlaufenden Außensteg auf. Im Außensteg ist eine zur Wand öffnende - ebenfalls umlaufende - Nut eingearbeitet, in die ein O-Ring als Dichtmittel eingelassen ist. Der Außensteg soll die Durchbiegung der Wand verhindern und Festigkeit sowie lückenlose Anlage der Dichtung ermöglichen. Bei der bekannten Kabeldurchführung sind die Dichtmaßnahme auf den Außenumfang der Kabelvorrichtung beschränkt. Die Fugen der Rahmenteile und die Durchtirittsöffnungen an der Rückseite der Kabelverschraubung weisen zur Wandöffnung und sind den an der Außenseite der Wand herrschenden Umweltverhältnissen ausgesetzt. Dabei kann in nachteiliger Weise Feuchtigkeit oder Staub über die Fugen der Rahmenteile oder über die Durchtrittsöffnungen auf die Innenseite der Wand, in den Innenraum eines Maschinengehäuses oder Schaltschranks, gelangen. Weiterer Stand der Technik wird in WO 2009/022960 A1, US 2 404 531 A und JP H09 247825 A offenbart.

Ausgehend vom Stand der Technik liegt der Erfindung die Aufgabe zugrunde, eine Leitungsdurchführung anzugeben, die die Abdichtung des Innenraums eines Gehäuses oder dergleichen verbessert.

Die voranstehende Aufgabe wird durch die Merkmale des Patentanspruches 1 gelöst. Danach ist eine Leitungsdurchführung der in Rede stehenden Art derart ausgestaltet, dass die Module gegeneinander abgedichtet sind.

Ausgehend vom Stand der Technik ist zunächst erkannt worden, dass dort ausschließlich eine Abdichtung zwischen der Rückseite der Leitungsdurchführung und der Wand stattfindet. Weiter ist erkannt worden, dass die zur Außenseite weisenden Durchtrittsöffnungen und Fugen zwischen den Bauteilen der bekannten Leitungsdurchführung Brücken zum Inneren des Gehäuses darstellen, über die Feuchtigkeit oder Schmutz in das Gehäuseinnere gelangen könnte. Erfindungsgemäß ist erkannt worden, dass die vorbeschriebenen Brücken vermieden werden können, wenn die Module gegeneinander abgedichtet sind. Dies könnte durch mindestens eine zusätzliche Dichtung erreicht werden oder durch die Dichtung, die auch die Abdichtung gegen die Wand realisiert. Während der gegenseitigen Abdichtung der Module schmiegt sich die Dichtung im Bereich der Aussparungen an die Leitungen oder - sofern Tüllen mit darin enthaltenen Leitungen verwendet werden - an die Tüllen an. Somit verbessert die erfindungsgemäße Leitungsdurchführung die Dichtqualität beim Einbau in die Wandöffnung erheblich.

Im Hinblick auf die Abdichtung der Leitungsdurchführung gegen die Wand, könnte die Dichtung eine erste Kontaktfläche aufweisen, die sich senkrecht zur Längsachse der Durchtrittsöffnung erstreckt. Im Gegensatz zu der aus dem Stand der Technik verwendeten O-Ring-Dichtung aus Gummi mit glatter Oberfläche könnte die Dichtung der erfindungsgemäßen Leitungsdurchführung eine rauhe Oberfläche aufweisen, so dass auch die stärkere Haftung das Dichtresultat verbessert wird. Hierzu könnte ein Elastomer verwendet werden, das sich von dem üblicherweise verwendeten Gummi des O-Rings unterscheidet

Für die erfindungsgemäße Leitungsdurchführung ist es wesentlich, dass die Dichtung eine zweite Kontaktfläche aufweist, die sich parallel zur Längsachse der Durchtrittsöffnung erstreckt. Über die zweite Kontaktfläche können verschiedene Abdichtungen vorgenommen werden. Zum einen kann der Kontakt zwischen den benachbarten Modulen hergestellt werden. Die Module werden schließlich zur Fixierung der Leitungen aufeinander gepresst. Die dann zwischenliegenden Dichtungen, die in vorteilhafter Weise auch bezüglich der zweiten Kontaktfläche eine rauhe Oberfläche aufweisen, erzielen ein sehr gutes Dichtresultat. Vorteilhafterweise treffen die Dichtungen beider Module bereichsweise aufeinander. Die zweite Kontaktfläche könnte zum anderen aber auch den Kontakt zwischen den Modulen und den in den Durchtrittsöffnungen sitzenden Leitungen herstellen. In diesem Zusammenhang könnten weiterführend gerade im Bereich der Aussparungen besondere, auf die mit der Dichtfunktion gekoppelte Haltefunktion gerichtete Formgebungen möglich sein.

Wenn anstatt der Leitungen Tüllen mit darin enthaltenen Leitungen in den Durchtrittsöffnungen sitzen, so könnte die zweite Kontaktfläche den Kontakt zwischen den Modulen und den Tüllen herstellen.

Für den Fall, dass an einem Modul zusätzliche Öffnungen vorgesehen ist, die beispielsweise der Aufnahme von Befestigungsmitteln zum Verhaken der erfindungsgemäßen Leitungsdurchführung am Randbereich der Wandöffnung dienen, so könnte die zweite Kontaktfläche auch den Kontakt zwischen dem Modul und den zusätzlichen, durch die Öffnungen geführten Bauteilen herstellen. Bei einem Ausführungsbeispiel wobei pro Modul eine einzige sich entsprechend der Kontur des Moduls erstreckende Dichtung vorgesehen ist, könnte der für die zusätzliche Öffnung vorgesehen Dichtungsabschnitt über einen Steg an die übrige Dichtung angeformt sein.

Nachdem die erste Kontaktfläche und die zweite Kontaktfläche die Module untereinander und die Module gegen die Leitungen oder Tüllen sowie ggf. gegenüber in Öffnungen geführten Bauteilen abdichten, könnte die Dichtung noch eine dritte Kontaktfläche aufweisen, die den Kontakt zum Modul zum Zweck der Befestigung der Dichtung am Modul dient. Diese dritte Kontaktfläche könnte also den Kontakt zum Modul während der Ausbildung einer stoffschlüssigen und / oder formschlüssigen Verbindung zwischen Dichtung und Modul herstellen. Dabei könnte die Dichtung eine Formgebung mit Nut aufweisen und auf dem zur Wand weisenden Außenumfangsrand des Moduls aufgesteckt sein. Zusätzlich könnte ein Stoffschluss durch ein Klebemittel den Formschluss ergänzen. Alternativ könnte die Dichtung auch als elastischer Streifen vorliegen, der den Außenumfangsrandbereich des Moduls unter Ausbildung eines Knicks übergreift und festgeklebt wird.

Die Dichtung könnte aber auch am Außenumfangsrand angespritzt sein. In materialmäßiger Hinsicht könnte die Dichtung aus einem Elastomer hergestellt sein.

Gemäß einem bereits angeführten Ausführungsbeispiel hat es sich im Hinblick auf eine kostengünstige Herstellung als vorteilhaft herausgestellt, pro Modul eine einzige, sich entsprechend der Kontur des Moduls erstreckende Dichtung vorzusehen, die alle relevanten Kontaktflächen umfasst. Eine solche Dichtung ist in sich geschlossen. Alternativ könnten separate Dichtungsabschnitte vorsehen, die zwischen den Modulkontaktflächen angeordnet sind. Sehr einfache Bauformen könnten auf das Aufeinandertreffen zweier Dichtungen ausschließen und lediglich den Dichtkontakt zum anderen Modul realisieren.

Für eine innige Verbindung zwischen Dichtung und Modul könnte das Modul eine Nut zur Aufnahme der Dichtung aufweisen. Diese Nut könnte sich entlang des Außenumfangs des Moduls erstrecken.

Zur Herstellung eines vorteilhaften Formschlusses könnte die Dichtung einen Basisbereich und einen Randbereich umfassen, die die dritte Kontaktfläche ausbilden und wobei der Basisbereich in die Nut eingreift, während der Randbereich am freien Ende der Nutöffnung anliegt. Die Formgebung der Dichtung könnte im Längsschnitt eine T-Form oder eine L-Form aufweisen. Der Kopfbereich der T-Form oder Fußbereich der L-Form könnte den Randbereich der Dichtung ausmachen. Der Basisbereich der Dichtung könnte durch den Schenkel der T-Form oder den Schenkel der L-Form repräsentiert werden. Die dritte Kontaktfläche erstreckt sich im Basisbereich parallel zur Längsachse der Durchtrittsöffnungen und im Randbereich senkrecht zur Längsachse der Durchtrittsöffnungen. Es ist von Vorteil, die Nut sehr tief auszuführen, so dass der Basisbereich der Dichtung etwa ein Drittel oder ein Viertel von der Gesamttiefenabmessung des Moduls in dieses eintaucht und den Formschluss dabei herstellt.

Zumindest im Bereich der Aussparungen könnte die Nutöffnung durch zwei unterschiedlich hohe parallele Nutstege gebildet sein. Der zur Leitung geringer beabstandete Steg könnte dabei in vorteilhafter Weise kürzer als der weiter von der leitung beabstandete Steg der Nutöffnung sein. Diese Ausgestaltung der Nutöffnung hat gerade im Bereich der Aussparungen den Vorteil, dass mehr von der zweiten Kontaktfläche zur Anlage an die Leitung oder die Tülle zur Verfügung steht und das Dichtresultat besonders gut ist. In vorteilhafter Weise ist die Nutöffnung auch in dem an die Aussparungen anschließenden Bereich der Module so gestaltet. Auch hier wird dadurch die zweite Kontaktfläche, die zwischen den Modulen wirkt, vergrößert und somit einer Feuchtigkeits-, Gas- oder Stoffbrücke im Bereich der Fuge zwischen den beiden Modulen entgegengewirkt. Ein anderer positiver Effekt des längeren Nutsteges besteht darin, dass er als Stütze wirkt.

Bei der vorbeschriebenen Ausgestaltungeiner Nut mit unterschiedlich hohen Stegen im Bereich der Aussparungen könnte das Profil einer umlaufenden Dichtung mit allen drei Kontaktflächen eine L-Form aufweisen, während das Profil im Bereich des vom Nachbarmodul wegweisenden Außenumfangs eine T-Form aufweisen könnte. Da der Bereich der Aussparungen an die Wandöffnung angrenzt, ist eine erste Kontaktfläche zur Wand nicht erforderlich.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung unter Angabe von zwei verschiedenen Dichtungen anhand der Zeichnung zu verweisen. In Verbindung mit der Erläuterung des angeführten Ausführungsbeispiels der Erfindung werden auch im Allgemeinen bevorzugte Ausgestaltungen und Weiterbildungen der Lehre erläutert. In der Zeichnung zeigen
- Fig. 1: in Perspektivdarstellung eine Vorderansicht der erfindungsgemäßen Leitungsdurchführung, mit zwei Modulen und Tüllen im Zusammenbau,
- Fig. 2: in Perspektivdarstellung eine Rückansicht des Gegenstandes aus Fig. 1 mit Blick auf die erste, zur Wand gerichtete Kontaktfläche der Dichtung,

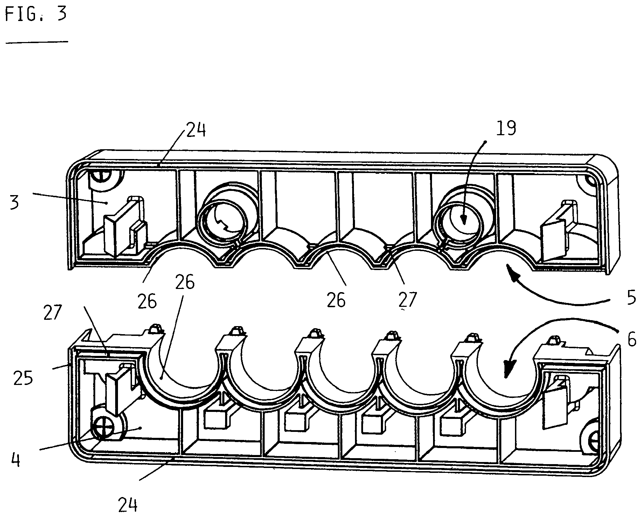

- Fig. 3: in Perspektivdarstellung, etwas vergrößert, eine Rückansicht des Gegenstandes aus Fig. 1 - demontiert mit freier Nut und ohne Dichtung,
- Fig. 4: in Perspektivdarstellung die Dichtung zum Einbau in den Gegenstand aus Fig. 3 mit Blick auf den in die Nut einzusetzenden Basisabschnitt der Dichtung,
- Fig. 5: in Perspektivdarstellung die Dichtung zum Einbau in den Gegenstand aus Fig. 3 mit Blick auf den Kopfabschnitt der Dichtung,
- Fig. 6: in Schnittdarstellung, vergrößert, den Gegenstand aus Fig. 2 und
- Fig. 7: in schematischer, skizzenhafter Schnittdarstellung, vergrößert, zwei Details aus Fig. 6, betreffend verschiedene Profile der Dichtung

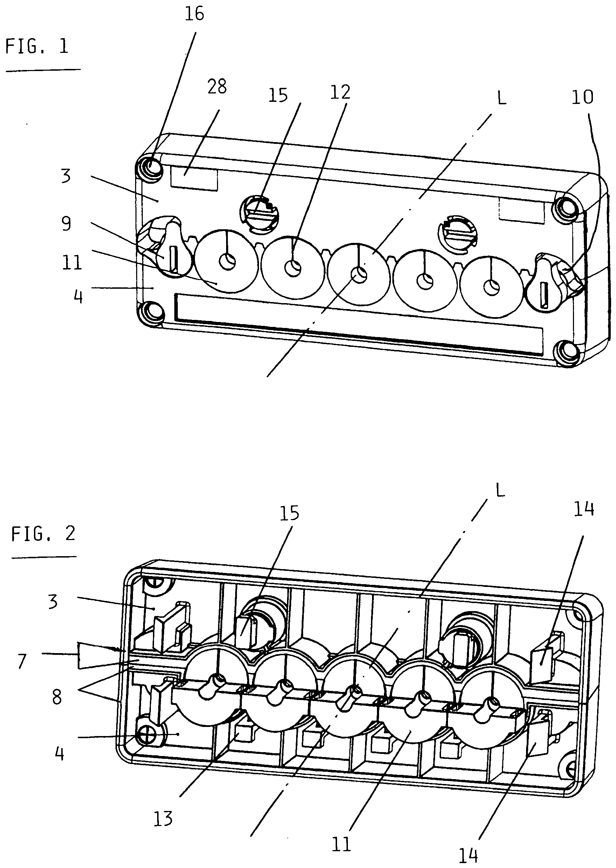

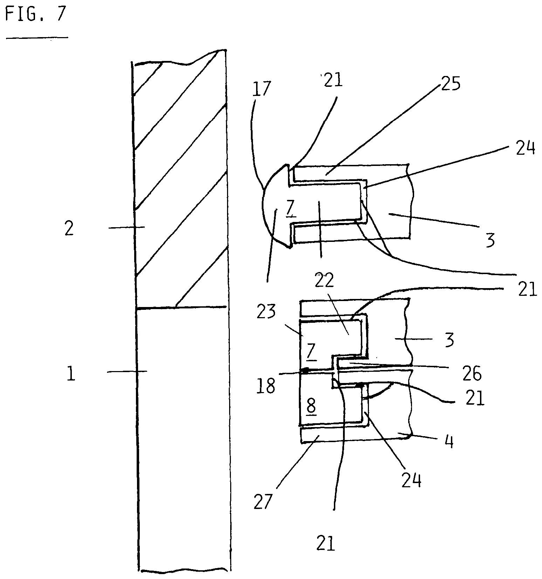

Die Figuren 1 und 2 zeigen eine für den Einbau in einer Öffnung 1 einer Wand 2 eines Gehäuses vorbereitete Leitungsdurchführung. Die Wand 2 mit der Öffnung 1 ist in Fig. 7 rein schematisch dargestellt. Die Leitungsdurchführung umfasst zwei Module 3, 4 mit Aussparungen 5, 6 und pro Modul 3, 4 eine Dichtung 7, 8, wobei durch die Aussparungen 5, 6 zweier benachbarter Module 3, 4 Durchtrittsöffnungen zur Durchführung einer hier nicht gezeigten Leitung ausgebildet sind und wobei die Dichtung 7, 8 die Leitungsdurchführung gegen die Wand 2 abdichtet.

Erfindungsgemäß weist jedes Modul 3, 4 eine umlaufende Dichtung 7, 8 auf, die nicht nur gegen die Wand 2 abdichtet, sondern auch die Module 3, 4 gegeneinander abdichtet.

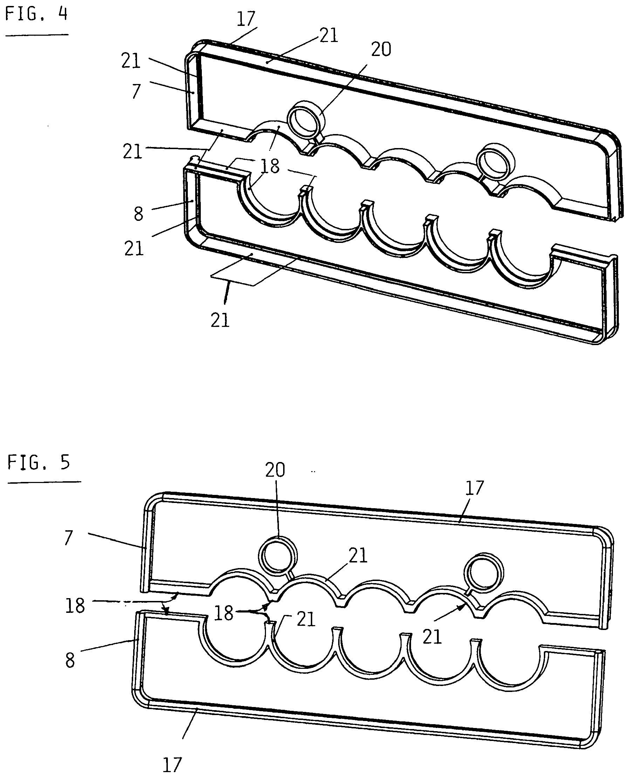

Die jeweils einstückigen Dichtungen 7, 8 sind in den Fig. 4 und 5 gezeigt. Mit 7 ist die obere Dichtung bezeichnet, die zum oberen Modul 3 passt. Mit 8 ist die untere Dichtung bezeichnet, die zum unteren Modul 4 passt.

Die in den Fig. 1 und 2 dargestellte Leitungsdurchführung ist bereits montiert und bereit, in die Öffnung 1 der Wand 2 eingesetzt zu werden. Bei der montierten Leitungsdurchführung sind die beiden Module 3, 4 über Drehverschlüsse 9 des unteren Moduls 4, die in kulissenbestückte Ausnehmungen 10 des oberen Moduls 3 eingreifen, kraft- und formschlüssig lösbar verbunden. Vor der Herstellung der Verbindung zwischen den Modulen 3, 4 sind Tüllen 11 mit Längsschlitzen 12 in die nach oben öffnenden Aussparungen 6 des unteren Moduls 4 eingesetzt. Die hier nicht gezeigte Leitung wird vor der Verbindung der Module 3, 4 über die Längsschlitze 12 in die Tülle 11 eingebracht.

Während der Verbindung der Module 3, 4 ergänzt die Aussparung 5 des oberen Moduls dann die Aussparung 6 des unteren Moduls 4 zur Durchtrittsöffnung. Mit L ist die Längsachse bezeichnet, die sich auf die Leitung, die Tülle 11 und die aus den zusammengefügten Aussparungen 5, 6 gebildete Durchtrittsöffnung bezieht.

An der in Fig. 2 gezeigten Rückseite der Leitungsdurchführung sind noch diverse Befestigungsmittel, nämlich Abstützhaken 13, beidseitige Rasthaken 14, und Drehhaken 15 vorgesehen. Die Drehhaken 15 sind von der in Fig. 1 gezeigten Vorderseite der Leitungsdurchführung betätigbar. Wenn die montierte Leitungsdurchführung in die Öffnung 1 der Wand 2 eingesetzt wird, stützen sich die Abstützhaken 13 auf dem unteren Randbereich der Öffnung 1 ab und umgreifen den Rand. Die Rasthaken 14 rasten in den beiden beabstandeten seitlichen Randbereichen der Öffnung 1 ein und umgreifen den Rand. Die Drehhaken 15 befinden sich während des Einsetzens der Leitungsdurchführung in einer Offenstellung, wobei sich der Hakenabschnitt des Drehhakens 15 senkrecht horizontal zur Längsachse L erstreckt. Zur Befestigung der Leitungsdurchführung in der Öffnung 1 der Wand 2 wird der Hakenabschnitt des Drehhakens 15 in eine aus Fig. 2 ersichtliche Verriegelungsstellung vertikal senkrecht zur Längsachse L verbracht und umgreift den oberen Randbereich der Öffnung 1. Mit 16 sind Eckbohrungen gezeigt, die nur dann zum Einsatz kommen, wenn die Wandstärke nicht zu den Befestigungsmitteln 13, 14, 15 passt.

Zur Abdichtung weist die Dichtung 7, 8 eine erste Kontaktfläche 17 auf, die sich senkrecht zur Längsachse L erstreckt und den Kontakt zur Wand 2 herstellt.

Die Dichtung 7, 8 weist eine zweite Kontaktfläche 18 auf, die sich parallel zur Längsachse L der Durchtrittsöffnung erstreckt. Einerseits stellt die zweite Kontaktfläche 18 den Kontakt zwischen den benachbarten Modulen 3, 4 her. Die zweite Kontaktfläche 18 stellt aber auch den Kontakt zwischen den Modulen 3, 4 und den in den Durchtrittsöffnungen sitzenden Tüllen 11 her, da die Dichtung auch innerhalb der Aussparungen 5, 6 angeordnet ist, eben sich entlang des Außenumfang des jeweiligen Moduls 3, 4 erstreckt.

Bei dem vorliegenden Ausführungsbeispiel sind im oberen Modul 3 noch zwei zusätzliche Öffnungen 19 zur Aufnahme der Drehhaken 15 vorgesehen. Die Fig. 4 und 5 zeigen, dass die Dichtung 7 zusätzliche ringförmige Dichtungsabschnitte 20 umfasst, die über einen nicht näher bezeichneten Steg mit der übrigen Dichtung 7 einstückig hergestellt sind. Auch die ringförmigen Dichtungsabschnitte 20 weisen eine zweite Kontaktfläche 18 auf, die die Leitungsdurchführung gegenüber dem Drehhaken 15 abdichtet. Außerdem bilden die ringförmigen Dichtungsabschnitte 20 auch die erste Kontaktfläche 19 aus, die wegen der Durchtrittsmöglichkeit des Drehhakens 17 durch die Öffnung 1 der Wand 2 nur in ihrem oberen Bereich wirksam wird.

Die Dichtung 7, 8 weist schließlich noch eine dritte Kontaktfläche 21 auf, die den Kontakt zum eigenen Modul 3, 4 herstellt. Dabei geht die Dichtung 7, 8 eine form- und kraftschlüssige Verbindung mit dem Modul 3, 4 ein. Die Kontaktfläche 20 erstreckt sich sowohl parallel als auch senkrecht zur Längsachse L. Auch in den ringförmigen Dichtungsabschnitten 20 sind Kontaktflächen 20 vorgesehen. Diese werden hier in die Öffnungen 19 des Moduls 3 eingeklebt.

Zur Ausbildung des Formschlusses weisen die Dichtung 7, 8 ein Profil und das Modul 3, 4 eine Nut 24 zur Aufnahme der Dichtung 7, 8 auf.

Die Dichtung 7, 8 weist ein Profil auf, das einen Basisabschnitt 22 und einen Kopfabschnitt 23 umfasst. Die Nut 24 weist entweder gleichlange Nutstege 25 oder verschieden lange Nutstege 26, 27 auf.

Die Nut 24 mit den verschieden langen Nutstegen 26, 27 erstreckt sich beim oberen Modul 3 über den kompletten unteren Rand, der die Aussparungen 5 inkludiert. Die Nut 24 mit den gleichlangen Nutstegen 25 erstreckt sich entlang der seitlichen Ränder und des oberen Randes des oberen Moduls 3.

Beim unteren Modul 4 erstreckt sich die Nut 24 mit den verschieden langen Nutstegen 26, 27 über den kompletten oberen Rand, der die Aussparungen 6 inkludiert. Die Nut 24 mit den gleichlangen Nutstegen 25 erstreckt sich entlang der seitlichen Ränder und des unteren Rand des unteren Moduls 4.

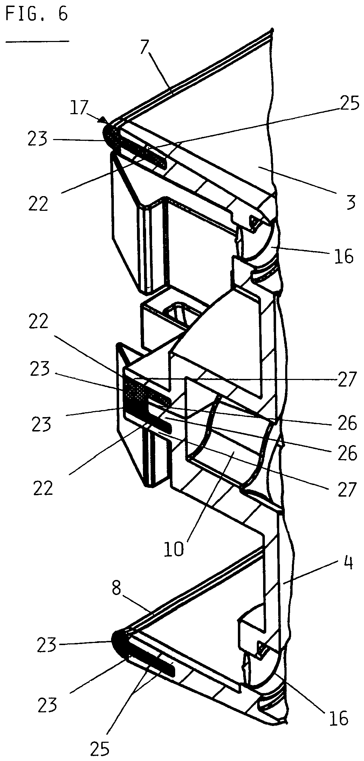

Die Dichtung 7, 8 weist gemäß den Fig. 6 und 7 bezüglich der Nut 24 mit den gleichlangen Nutstegen 25 eine Formgebung auf, die einem T-Profil vergleichbar ist. Der Kopfabschnitt 23 des T-Profils der Dichtung 7, 8 ist konvex gewölbt und beinhaltet die erste Kontaktfläche 17, die die Leitungsdurchführung gegen die Wand 1 abdichtet und die dritte Kontaktfläche 21, die sich auf den Stirnseiten der Nutstege 25 abstützt. Im montierten Zustand wird der Kopfabschnitt 23 verpresst, so dass die Wölbung minimiert wird und eine weitgehend gleichmäßige Dichtschicht erzeugt wird. Der Basisabschnitt 22 des T-Profils der Dichtung 7 ist rechteckig und taucht in die entsprechend geformte Nut 24 des Moduls 3, 4 ein und bildet dort die dritte Kontaktfläche 21 zu den Nutstegen 25 und zum nicht näher bezeichneten Nutboden der Nut 24 des Moduls 3, 4 aus.

Im Bereich der Nut 24 mit unterschiedlich langen Nutstegen 26, 27 weist die Dichtung 7, 8 eine Formgebung auf, die einem L-Profil ähnelt. Der abgewinkelte kürzere Abschnitt des L-Profils bildet den Kopfabschnitt 23 aus, der sich mit seiner dritten Kontaktfläche 21 gegen die Stirnseite der kürzeren Nutstege 26 abstützt.

Bei dem oberen Modul 3 weisen die kürzeren Nutstege 26 zum unteren Modul 4. Bei dem unteren Modul 4 weisen die kürzeren Nutstege 26 zum oberen Modul 3. Dadurch können die Dichtungen 7, 8 aufeinandertreffen und jeweils die zweite Kontaktfläche 18 ausbilden und so die Module 3, 4 gegeneinander abdichten. Der Basisabschnitt 22 des L-Profils bildet analog zum T-Profil die dritte Kontaktfläche 21 aus die den Kontakt zur Nut 24 des Moduls 3, 4 herstellt.

Im Bereich der Aussparungen 5, 6 liegt die zweite Kontaktfläche 18 der Dichtung 7, 8 an der Tülle 11 an und stellt dort die Dichtheit der Leitungsdurchführung her.

Mit 28 sind Felder an den unteren Modul 4 zur Aufnahme von Informationen bezeichnet.

Hinsichtlich weiterer, in den Figuren nicht gezeigter Merkmale wird auf den allgemeinen Teil der Beschreibung verwiesen.

## Patentansprüche

1. Leitungsdurchführung zur Festlegung in einer Öffnung (1) einer Wand (2) eines Gehäuses oder dergleichen, umfassend mindestens zwei miteinander verbindbare Module (3, 4) mit Aussparungen (5, 6) und mindestens eine Dichtung (7, 8), wobei durch die Aussparungen (5, 6) zweier benachbarter Module (3, 4) Durchtrittsöffnungen zur Durchführung einer Leitung ausgebildet sind und wobei die Dichtung (7, 8) die Leitungsdurchführung gegen die Wand (2) abdichtet, wobei die Module (3, 4) gegeneinander abgedichtet sind, wobei die Dichtung (7, 8) eine erste Kontaktfläche (17) aufweist, die sich senkrecht zur Längsachse (L) der Durchtrittsöffnung erstreckt und den dichtenden Kontakt zur Wand (2) herstellt und wobei die Dichtung (7, 8) eine zweite Kontaktfläche (18) aufweist, die sich parallel zur Längsachse (L) der Durchtrittsöffnung erstreckt und den dichtenden Kontakt zwischen den benachbarten Modulen (3, 4) herstellt wobei jedes Modul (3, 4) eine umlaufende Dichtung (7, 8) aufweist, wobei die zweite Kontaktfläche (18) der Dichtung (7, 8) auch den dichtenden Kontakt zwischen den Modulen (3, 4) und den in den Durchtrittsöffnungen sitzenden Leitungen oder zwischen den Modulen (3, 4) und in den Durchtrittsöffnungen sitzenden Tüllen (13), in denen die Leitungen enthalten sind, herstellt, **dadurch gekennzeichnet, dass** das Modul (3, 4) eine Nut (24) für die Dichtung (7, 8) aufweist und dass die Dichtung (7, 8) eine Basis (22) und einen Kopfteil (23) aufweist, welche zumindest die dritte Kontaktfläche (21) ausbilden, wobei die Basis (22) in die Nut (24) eingreift, während sich der Kopfteil (23) an Nutstegen (25, 26, 27) der Nut (24) abstützt.

2. Leitungsdurchführung nach Anspruch 1, **dadurch gekennzeichnet, dass** die Dichtung (7) innerhalb einer Öffnung (19) des Moduls (3) angeordnet ist und dass die zweite Kontaktfläche (18) der Dichtung (7) den Kontakt zwischen dem Modul (3) und einem zusätzlichen, durch die Öffnung (19) geführten Bauteil, insbesondere einem Drehhaken (15), herstellt.

3. Leitungsdurchführung nach Anspruch 1 oder 2, **dadurch gekennzeichnet, dass** die Dichtung eine dritte Kontaktfläche (21) aufweist, die den Kontakt zum Modul (3, 4) während der Ausbildung einer stoffschlüssigen und / oder formschlüssigen und / oder kraftschlüssigen Verbindung zwischen Dichtung (7, 8) und Modul (3, 4) herstellt.

4. Leitungsdurchführung nach einem der Ansprüche 1 bis 3, **dadurch gekennzeichnet, dass** sich die Dichtung (7, 8) entlang der zur Wand (2) weisenden Kontur des Moduls (3, 4) erstreckt.

5. Leitungsdurchführung nach einem der Ansprüche 1 bis 4, **dadurch gekennzeichnet, dass** die Nuten (24) der zueinander weisenden Ränder der Module 3, 4 durch zwei unterschiedlich lange parallele Nutstege (26, 27) gebildet sind, wobei die kürzeren Nutstege (26) während der Verbindung zwischen den Modulen (3, 4) aneinanderliegen.

## Claims

1. A cable bushing for mounting in an opening (1) in a wall (2) of a housing or the like, comprising at least two interconnectable modules (3, 4) which have cut-outs (5, 6) and at least one seal (7, 8), the cut-outs (5, 6) of two adjacent modules (3, 4) forming through-openings for feeding through a cable, and the seal (7, 8) sealing the cable bushing against the wall (2), the modules (3, 4) being sealed off from each other, the seal (7, 8) having a first contact face (17) which extends perpendicular to the longitudinal axis (L) of the through-opening and produces the sealing contact with the wall (2), and the seal (7, 8) having a second contact face (18) which extends parallel to the longitudinal axis (L) of the through-opening and produces the sealing contact between the adjacent modules (3, 4), each module (3, 4) having a peripheral seal (7, 8), the second contact face (18) of the seal (7, 8) also producing the sealing contact between the modules (3, 4) and the cables lying in the through-openings or between the modules (3, 4) and the sleeves (13) which lie in the through-openings and contain the cables,
**characterised in that**
the module (3, 4) has a groove (24) for the seal (7, 8), and the seal (7, 8) has a base (22) and a head part (23) which form at least the third contact face (21), wherein the base (22) fits into the groove (24) while the head part (23) is supported on groove webs (25, 26, 27) of the groove (24).

2. The cable bushing according to claim 1, **characterised in that** the seal (7) is arranged inside an opening (19) in the module (3), and the second contact face (18) of the seal (7) produces the contact between the module (3) and an additional component, in particular a rotary hook (15), fed through the opening (19).

3. The cable bushing according to claim 1 or 2, **characterised in that** the seal has a third contact face (21) which produces the contact with the module (3, 4) during formation of an integral and/or interlocking and/or frictional connection between the seal (7, 8) and the module (3, 4).

4. The cable bushing according to any one of claims 1 to 3, **characterised in that** the seal (7, 8) extends along the contour of the module (3, 4) facing the wall (2).

5. The cable bushing according to any one of claims 1 to 4, **characterised in that** the grooves (24) of the edges of the modules (3, 4) facing each other are formed by two parallel groove webs (26, 27) of different lengths, wherein the shorter groove webs (26) bear against each other during interconnection of the modules (3, 4).

## Revendications

1. Passage de conduite pour fixation dans une ouverture (1) d'un mur (2) d'un boîtier ou d'un élément analogue, comprenant au moins deux modules reliables entre eux (3, 4) avec des cavités (5, 6) et au moins un joint d'étanchéité (7, 8), des ouvertures de traversée pour faire passer une conduite étant constituées par les cavités (5, 6) de deux modules adjacents (3, 4) et le joint d'étanchéité (7, 8) étanchéifiant le passage de conduite contre le mur (2), les modules (3, 4) étant étanchéifiés l'un contre l'autre, le joint d'étanchéité (7, 8) comportant une première surface de contact (17) qui s'étend perpendiculairement à l'axe longitudinal (L) de l'ouverture de traversée et établit le contact étanchéifiant avec le mur (2) et le joint d'étanchéité (7, 8) comportant une deuxième surface de contact (18), qui s'étend parallèlement à l'axe longitudinal (L) de l'ouverture de traversée et établit le contact étanchéifiant entre les deux modules adjacents (3, 4), chaque module (3, 4) comportant un joint d'étanchéité périphérique (7, 8), la deuxième surface de contact (18) du joint d'étanchéité (7, 8) établissant également le contact étanchéifiant entre les modules (3, 4) et les conduites reposant dans les ouvertures de traversée ou entre les modules (3, 4) dans les gaines (13) reposant dans les ouvertures de passage, dans lesquelles les conduites sont contenues,
**caractérisé en ce que**
le module (3, 4) comporte une rainure (24) pour le joint d'étanchéité (7, 8) et **en ce que** le joint d'étanchéité (7, 8) comporte une base (22) et une partie de tête (23), lesquelles constituent au moins la troisième surface de contact (21), la base (22) venant en prise dans la rainure (24), pendant que la partie de tête (23) s'appuie sur les moulures de rainure (25, 26, 27) de la rainure (24).

2. Passage de conduite selon la revendication 1, **caractérisé en ce que** le joint d'étanchéité (7) est disposé à l'intérieur d'une ouverture (19) du module (3) et **en ce que** la deuxième surface de contact (18) du joint d'étanchéité (7) établit le contact entre le module (3) et un composant supplémentaire, passé à travers l'ouverture (19), notamment un crochet tournant (15).

3. Passage de conduite selon la revendication 1 ou 2, **caractérisé en ce que** le joint d'étanchéité comporte une troisième surface de contact (21), qui établit le contact avec le module (3, 4) pendant la formation d'une liaison par conformité de matière et/ou conformité de forme et/ou conformité de force entre le joint d'étanchéité (7, 8) et le module (3, 4).

4. Passage de conduite selon l'une quelconque des revendications 1 à 3, **caractérisé en ce que** le joint d'étanchéité (7, 8) s'étend le long du contour du module (3, 4) tourné vers le mur (2).

5. Passage de conduite selon l'une quelconque des revendications 1 à 4, **caractérisé en ce que** les rainures (24) des bords tournés l'un vers l'autre des modules (3, 4) sont constituées par deux moulures de rainure (26, 27) parallèles de longueur différente, les moulures de rainure plus courtes (26) étant situées l'une à côté de l'autre pendant la liaison entre les modules (3, 4).
